(19) Europäisches Patentamt
European Patent Office
Office européen des brevets

(11) **EP 3 785 061 B1**

(12) **FASCICULE DE BREVET EUROPEEN**

(45) Date de publication et mention
de la délivrance du brevet:
**18.01.2023 Bulletin 2023/03**

(21) Numéro de dépôt: **19720107.2**

(22) Date de dépôt: **24.04.2019**

(51) Classification Internationale des Brevets (IPC):
**G02B 19/00** *(2006.01)*   **G06F 3/01** *(2006.01)*
**G02B 6/00** *(2006.01)*   **G02B 17/08** *(2006.01)*

(52) Classification Coopérative des Brevets (CPC):
**G02B 19/0028; G02B 17/086; G02B 19/0061;
G02B 19/0066; G02B 19/0076; G06F 3/017**

(86) Numéro de dépôt international:
**PCT/EP2019/060438**

(87) Numéro de publication internationale:
**WO 2019/206946 (31.10.2019 Gazette 2019/44)**

(54) **GUIDE DE LUMIERE POUR MODULE D'INTERFACE A DETECTION DE GESTES**

LICHTLEITER FÜR GESTENDETEKTIONSSCHNITTSTELLENMODUL

LIGHT-GUIDE FOR GESTURE-DETECTING INTERFACE MODULE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.04.2018 FR 1853590**

(43) Date de publication de la demande:
**03.03.2021 Bulletin 2021/09**

(73) Titulaire: **Valeo Comfort and Driving Assistance
94046 Créteil Cedex (FR)**

(72) Inventeurs:
• **IRZYK, Michael
94046 CRETEIL (FR)**

• **CABANA, Thibault
94046 CRETEIL (FR)**
• **MENET, Marc
94046 CRETEIL (FR)**

(74) Mandataire: **Delplanque, Arnaud
Valeo Comfort and Driving Assistance
6 rue Daniel Costantini
94000 Créteil (FR)**

(56) Documents cités:
**WO-A1-2013/058381   US-B1- 9 664 909**

Parse d

**Description**

La présente invention concerne un module d'interface à détection de gestes ou de proximité, en particulier pour une utilisation dans un habitacle de véhicule automobile.

Les détecteurs de gestes ou de proximité détectent la présence d'une partie du corps, généralement la main, les doigts et/ou une partie du bras d'un utilisateur dans un espace de détection. La présence, la position et/ou les mouvements de ladite partie du corps de l'utilisateur sont alors pris en compte pour le contrôle de fonctions commandées par le module d'interface.

L'entrée dans l'espace de détection de la main d'un utilisateur peut par exemple servir à faire passer le module d'interface d'un mode veille à un mode actif. Si ledit module d'interface comporte par exemple un écran tactile ou d'affichage, l'écran peut être initialement désactivé ou rétroéclairé de façon moins importante en mode veille, et la surface tactile peut être activée uniquement lorsque le module d'interface sort du mode veille c'est à dire lorsqu'un utilisateur approche sa main en vue d'interagir avec le module d'interface.

Lorsque la détection de la position de la main ou du bras de l'utilisateur dans l'espace de détection est prise en compte, les icônes dans la portion de l'écran proche de la position détectée peuvent être agrandies, en particulier proportionnellement à la proximité de la main à l'écran.

La variation de position de la main ou du bras détectée, c'est à dire les mouvements de la main ou du bras, peuvent servir directement à modifier le fonctionnement de modules du véhicule, tels que la climatisation, un système de lecture de médias, l'éclairage intérieur du véhicule, un menu affiché sur l'écran tactile. Par exemple, un balayage (« wipe ») de la main de bas en haut ou de haut en bas peut servir à augmenter ou baisser le volume sonore du système de lecture de médias, tandis qu'un balayage de gauche à droite ou de droite à gauche peut servir à passer à la station radio ou la piste de lecture suivante ou précédente.

Pour positionner et suivre plus précisément la main de l'utilisateur, un nombre élevé de faisceaux lumineux est requis. Ces faisceaux sont par exemple produits au moyen de guides de lumière situés au bord de l'écran et utilisant la lumière d'une ou plusieurs diodes électroluminescentes. Les guides de lumière sont conformés de sorte qu'ils émettent au moins une portion de la lumière recueillie sous forme de faisceau conique, fin selon une direction transverse et allongé selon l'autre direction transverse, ce qui permet d'approcher un plan de l'espace de détection.

L'espace de détection est alors quadrillé au moyen de tels plans de faisceaux.

En déterminant quel faisceau est traversé par la main à quel moment, la position approximative de la main peut alors être déterminée et suivie au cours du temps pour repérer et analyser des gestes spécifiques de l'utilisateur.

Chacun des faisceaux « plans » est généré au moyen d'un guide de lumière incliné en fonction de l'inclinaison souhaitée du faisceau.

L'angle d'inclinaison maximal atteignable par les guides d'ondes est généralement inférieur à 10, voire parfois 15°. Dès lors, pour couvrir un espace de détection important (par exemple devant un écran de grandes dimensions), un sous ensemble des guides de lumière, avec les diodes et l'électronique associée, est incliné par rapport au plan qui contient l'écran.

Ces modules d'éclairage distincts disposés dans des plans inclinés nécessitent alors un second circuit imprimé et des attaches les maintenant en position inclinée. La multiplication des modules d'éclairage rend donc le module d'interface plus volumineux et potentiellement plus cher. Le document US 9 664 909 B1 divulgue un guide de lumière, réalisé sous forme de prisme en matériau transparent. Le document WO 2013/058381 A1 divulgue un condenseur optique constitué de deux prismes accolés.

Afin de résoudre au moins partiellement le problème précédemment mentionné, l'invention a pour objet un guide de lumière pour module d'interface comprenant les caractéristiques définies dans la revendication 1. Les revendications 2-5 sont dépendantes et définissent des modes de réalisation additionnels. La revendication 6 définit un module d'interface comprenant un guide de lumière selon l'une des revendications 1-5. les revendications 7-9 sont dépendantes de la revendication 6 et définissent des modes de réalisation additionnels.

D'autres caractéristiques et avantages de l'invention apparaîtront plus clairement à la lecture de la description suivante, donnée à titre d'exemple illustratif et non limitatif, et des dessins annexés parmi lesquels :

- la figure 1 montre schématiquement un intérieur de véhicule avec un module d'interface,
- la figure 2 est une vue de profil schématique de l'interface de la figure 1 prise séparément,
- la figure 3 est une vue en coupe d'un module de détection de l'interface des figures 1 et 2,
- la figure 4 est une représentation schématique de guide de lumière,
- les figures 5 et 6 sont des vues en coupe de modules de modes de réalisation alternatifs de module de détection,
- la figure 7 illustre le placement du guide de lumière dans l'interface,
- les figures 8a et 8b sont une vue longitudinale et une vue partielle en perspective d'un mode de réalisation particulier de guide de lumière,
- la figure 9 est une représentation schématique d'un second guide de lumière pour module d'interface,
- la figure 10a illustre la disposition du guide de lumière de la figure 9 dans un détecteur,
- la figure 10b est une vue partielle en perspective d'un mode de réalisation particulier du second guide de lumière,

- la figure 11 est une vue en perspective du mode de réalisation principal selon l'invention d'un guide de lumière,
- les figures 12a et 12b illustrent des modes de réalisation alternatifs de guide de lumière tel qu'en figures 3 et 9,
- la figure 13 illustre la disposition de deux guides de lumières dans un même capteur de gestes.

Sur toutes les figures, les mêmes références se rapportent aux mêmes éléments.

Les réalisations décrites en faisant référence aux figures sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres modes de réalisation.

Les termes ci-après tels que « premier », « deuxième » et équivalents sont donnés pour des raisons de simple référencement, sans considération de priorité, de préférence ou d'ordre particulier. La plupart des objets ainsi référencés peuvent voir leurs références interchangées sans dévier du concept de l'invention.

En particulier, certains éléments sont référencés dans le cadre d'une orientation suivant le sens de propagation de la lumière, dans un sens de fonctionnement particulier. Les termes tels que « en amont », « en aval », « avant », « après », donnés sans précision ultérieure, sont à interpréter dans ce sens.

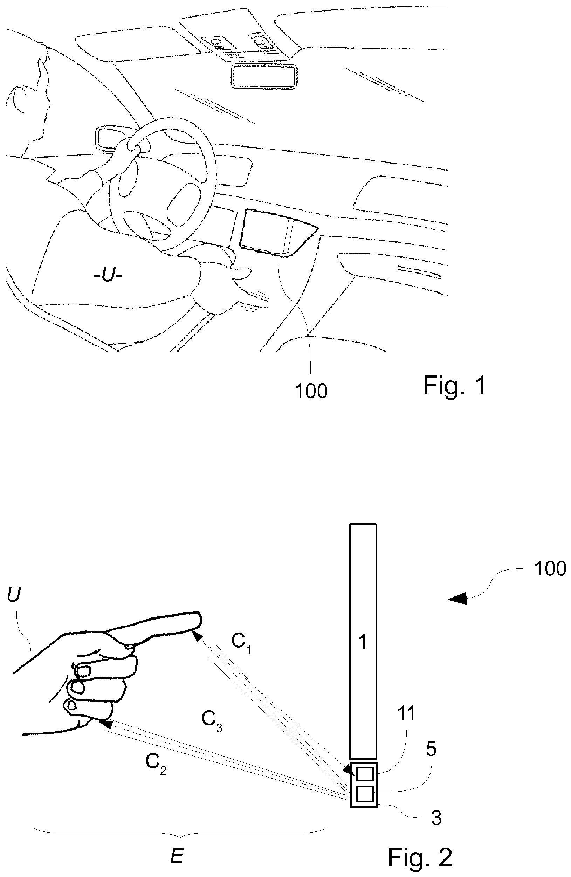

La figure 1 montre de façon schématique un habitacle 1 de véhicule automobile, avec un dispositif optique 100.

Le module d'interface 100 est ici installé dans la console centrale du véhicule : la paroi avant verticale ou inclinée, située entre le conducteur et le passager à l'avant du véhicule. Cet emplacement permet au conducteur, qui est ici l'utilisateur U du module d'interface 100, d'amener aisément sa main dans l'espace de détection du module d'interface 100 pour interagir avec le module d'interface 100.

Le module d'interface est montré plus en détail en figure 2.

La figure 2 est une vue de côté du module d'interface 100, montrant plus en détail un écran 1 et des détecteurs de gestes 3, ainsi que la main d'un utilisateur U, par exemple le conducteur ou le passager avant du véhicule. En figure 2, l'écran 1 et les détecteurs de gestes 3 sont situés dans un plan vertical, et représentés par leurs sections rectangulaires.

L'écran 1 est par exemple un écran à transistors en couche mince, notamment à diodes électroluminescentes, à plasma ou à cristaux liquides. L'écran 1 affiche des données relatives au fonctionnement de modules fonctionnels du véhicule, par exemple un module de climatisation, une installation audio, un assistant de navigation etc.

Les données affichées sont, par exemple dans le cadre d'un module de climatisation, une température de consigne, une puissance de soufflerie, une température extérieure etc.

En alternative, un panneau de touches, de boutons, de diodes électroluminescentes ou une surface tactile peut remplacer l'écran 1, qui peut être simplement un écran d'affichage, ou bien un écran tactile.

Dans le cas d'un écran 1 tactile, la détection de la main approchant peut par exemple servir à sortir la dalle tactile recouvrant l'écran 1 d'un état de veille ou bien à animer et/ou agrandir des icônes autour d'une position d'appui attendue. Dans le cas d'un écran 1 d'affichage, la détection de l'approche de la main de l'utilisateur U peut servir à déclencher une augmentation d'un rétroéclairage de l'écran 1.

Des détecteurs 3 sont positionnés sur la périphérie de l'écran, un détecteur 3 est représenté au-dessous de l'écran 1, mais d'autres détecteurs 3 peuvent être implémentés sur les côtés et au-dessus de l'écran 1.

Le ou les détecteurs 3 sont par exemple des capteurs de présence ou de proximité, qui détectent simplement la présence de la main de l'utilisateur U dans les zones C1, C2, qui sont ici des cônes allongés parallèlement au bord de l'écran le plus proche du détecteur 3, approchant ainsi un plan dans un espace de détection E.

Les détecteurs 3 génèrent au moyen de sources de lumière 5 des faisceaux de lumière selon des directions privilégiées autour des zones C1, C2, représentés par des flèches en pointillés orientées dans le sens de propagation, dans l'espace de détection E situé devant l'écran 1. Lorsque l'utilisateur U amène sa main dans ledit espace de détection E, sa main coupe une partie des faisceaux des détecteurs 3.

La main de l'utilisateur U réfléchit ou diffuse alors une partie de la lumière du faisceau vers le détecteur 3, où cette lumière réfléchie ou diffusée est reçue par un détecteur photovoltaïque 11 et interprétée comme détection de la main de l'utilisateur U dans l'espace de détection E au niveau du faisceau intersecté.

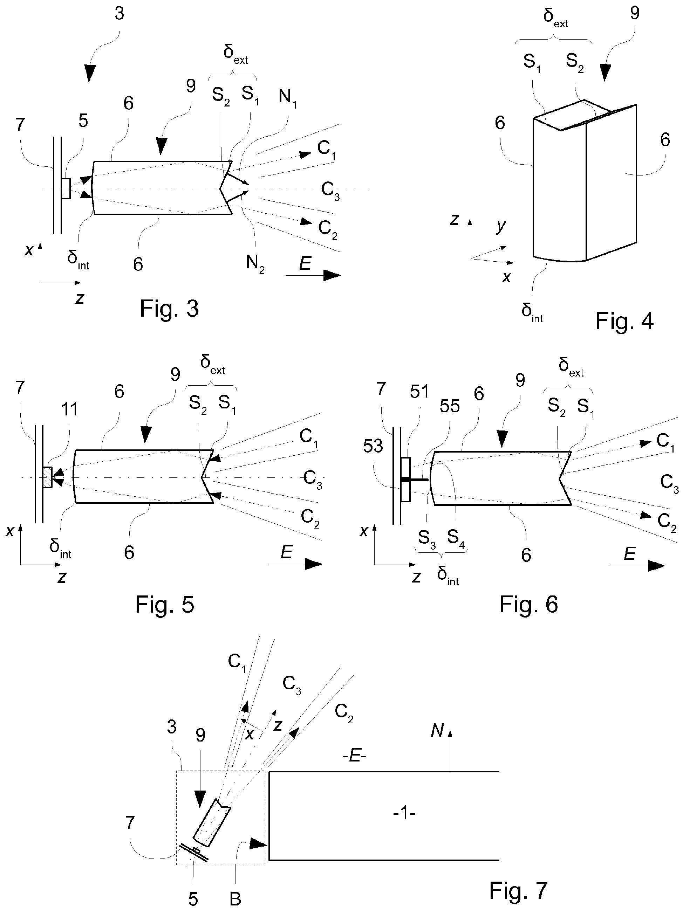

La (les) source(s) de lumière 5 et le(s) détecteur(s) photovoltaïque(s) 11 sont associés à des guides de lumière non représentés en figure 2 et détaillés sur les figures 3 à 13.

Pour permettre un positionnement et un suivi de mouvements de la main de l'utilisateur U, l'espace de détection est quadrillé par des faisceaux issus des détecteurs 3. Les faisceaux C1, C2 peuvent en particulier être réalisés sous forme de cônes, dont le sommet est situé au niveau du détecteur 3, allongés dans une direction et fins (quelques degrés) dans l'autre. Les faisceaux C1, C2 sont en particulier orientés dans des directions inclinées avec des angles croissants par rapport à la normale N à l'écran 1 en direction de l'intérieur de l'espace de détection E, et séparés par une zone C3 elle aussi en faisceau conique dans laquelle la luminosité émise ou détectée est moindre.

En utilisant un ensemble de faisceaux de cette forme, avec une partie des faisceaux associée à un premier détecteur 3 vertical et orientée selon une longueur de l'écran 1, et une autre partie des faisceaux associée à un deuxième détecteur 3 horizontal orientés selon la largeur de l'écran 1, on peut réaliser un quadrillage de l'espace de détection E. En détectant et en enregistrant quels faisceaux sont coupés à quel instant par la main de l'utilisateur U, on peut détecter la présence et analyser des mouvements simples de la main de l'utilisateur U dans l'espace de détection E.

Le détecteur 3 peut alors faire partie d'un détecteur d'approche, détectant simplement l'entrée dans l'espace E et l'approche de l'écran 1 de la main de l'utilisateur U en détectant la présence de la main de l'utilisateur U dans chacun des faisceaux C1, C2 de façon successive.

En alternative, le détecteur 3 peut être utilisé dans le cadre d'une interface à interprétation de gestes, l'utilisateur U réalise alors des gestes dans l'espace de détection E pour contrôler une ou plusieurs fonctions et organes du véhicule, en particulier en combinaison avec l'écran 1.

Pour détecter et interpréter des gestes simples tels que des balayages verticaux ou horizontaux, des figures géométriques simples (croix, cercles, vagues etc.), une résolution relativement faible est requise, mais une pluralité de faisceaux (entre trois et six typiquement selon la taille de l'écran 1) est toutefois requise.

Une unité d'émission de lumière d'un mode de réalisation d'un détecteur 3 qui coopère avec une unité associée de détection de lumière, est montrée schématiquement en vue en coupe en figure 3.

Cette unité d'émission de lumière comporte une source de lumière, ici une diode électroluminescente 5, émettant de la lumière dans un domaine spectral invisible pour l'œil humain, par exemple dans le domaine infrarouge, et un guide de lumière 9.

Cette diode électroluminescente 5 est disposée sur un circuit imprimé 7, réalisé notamment sous forme de plaque de résine sur laquelle des pistes métalliques sont gravées. Le circuit imprimé 7 assure en particulier l'alimentation électrique de la diode électroluminescente 5 en étant relié à une source de courant électrique, par exemple un adaptateur de puissance puisant du courant électrique de la batterie du véhicule. La diode électroluminescente 5 et le circuit imprimé 7 sont situés d'un côté opposé à l'espace de détection E du détecteur 3, dénommé côté intérieur ci-après.

En alternative, une diode laser de type VCSEL (« vertical cavity surface emitting laser » ou laser à cavité verticale émettant par la surface en français) peut être utilisée, en combinaison avec un dispositif optique tel qu'une lentille surmoulée pour générer un faisceau de lumière conique.

Le circuit imprimé 7 définit un plan xy, la direction globale de propagation de la lumière définit une direction z, les directions xyz formant ici un repère orthogonal. Dans les modes de réalisation privilégiés, la direction longitudinale transverse y est parallèle au bord de l'écran 1 contre lequel le détecteur 3 doit être disposé.

La direction y est parallèle au bord de l'écran 1 le long duquel le détecteur 3 est disposé. De ce fait, la direction y peut, dans certains modes de réalisation, se confondre avec une direction ou axe longitudinale du guide de lumière 9. La direction x, orthogonale dans le plan du circuit imprimé 7 est désignée comme épaisseur. La direction z sera ci-après nommée hauteur, et est par exemple parallèle à un axe optique des guides de lumière 9 mentionnés.

Le faisceau lumineux issu de la diode électroluminescente 5 est capté par un guide de lumière 9, réalisé en matériau translucide ou transparent dans le domaine spectral de la diode électroluminescente 5, par exemple du polycarbonate, notamment moulé par injection. Le guide de lumière 9 est représenté en perspective en figure 4.

Le guide de lumière 9 comporte un corps allongé selon la direction longitudinale y et relativement fin dans la direction de l'épaisseur x orthogonale à y. Par exemple, l'épaisseur selon la direction x du corps du guide de lumière 9 est comprise entre 5 et 20mm, tandis que la longueur dans la direction y est comprise entre 40mm et la longueur totale du côté de l'écran 1, ou plus généralement de l'élément d'interface le long duquel le détecteur 3 est disposé.

Le guide de lumière 9 comporte un dioptre intérieur $\delta_{int}$ et un dioptre extérieur $\delta_{ext}$.

Le dioptre intérieur $\delta_{int}$ est disposé en face du circuit imprimé 7, en vis-à-vis de la diode électroluminescente 5, et le dioptre extérieur $\delta_{ext}$ est disposé du côté opposé selon la direction z, en direction de l'espace de détection E.

Le dioptre intérieur $\delta_{int}$ est réalisé plan, en particulier parallèle au circuit imprimé 7, ou bien courbé dans le plan xz ou yz, ou bien encore sous forme de lentille convergente, dont le foyer est alors situé à hauteur du circuit imprimé 7, en particulier au niveau de la position attendue, à l'état assemblé du détecteur 3, de la diode électroluminescente 5. La forme du dioptre intérieur $\delta_{int}$ sert alors en particulier à former un front d'onde de forme connue et contrôlée, pour une meilleure mise en forme des faisceaux coniques obtenus.

Dans le mode de réalisation de la figure 3, le dioptre intérieur $\delta_{int}$ est un dioptre d'entrée : la lumière issue de la diode électroluminescente 5 est recueillie par ledit dioptre intérieur $\delta_{int}$ et réfléchie par réflexion totale sur les parois de guidage 6 en yz.

Du côté éloigné selon la hauteur z du circuit imprimé 7, portant la diode électroluminescente 5, à l'extrémité opposée au dioptre intérieur $\delta_{int}$, se trouve le dioptre extérieur $\delta_{ext}$ du guide de lumière 9, qui est un dioptre de sortie dans le mode de réalisation de la figure 3.

Ce dioptre extérieur $\delta_{ext}$ comporte deux surfa-

ces transverses planes S1, S2, distinctes et inclinées l'une par rapport à l'autre. En particulier, leurs normales respectives N1 et N2 sont inclinées avec un angle compris entre 10° et 120°, en particulier de l'ordre de 20° à 90°.

Le dioptre extérieur $\delta_{ext}$ est de section transverse (selon le plan xz) en forme de V concave.

Les surfaces planes S1, S2 conjuguent chacune de la lumière entre d'une part deux portions séparées C1, C2 de l'espace de détection E et le dioptre intérieur $\delta_{int}$ d'autre part. Par « conjuguer » on entend ici que, selon le sens de propagation de la lumière, soit la lumière entrant dans le dioptre intérieur $\delta_{int}$ est émise dans les cônes C1, C2, soit la lumière entrant dans les surfaces planes S1, S2 à rayons contenus dans les cônes C1, C2 est émise par le dioptre intérieur $\delta_{int}$.

Dans le mode de réalisation de la figure 3, le dioptre intérieur $\delta_{int}$ est un dioptre d'entrée, et le dioptre extérieur $\delta_{ext}$ est un dioptre de sortie.

La lumière sortant par la surface S1 dudit dioptre extérieur $\delta_{ext}$ est donc émise dans un cône C1 allongé selon la direction transverse y, et peu ouvert dans le plan xz de la figure 3. Le faisceau émis est donc centré autour d'un plan transverse incliné. L'inclinaison dudit plan est fonction de la direction de la normale N1 de la surface S1 et de l'indice du matériau transparent du guide de lumière 9.

De même la lumière sortant par la surface S2 est émise dans un cône allongé transversalement C2 qui est séparé du premier cône d'émission C1 par un troisième cône allongé C3 dans lequel peu voire pas de lumière est émis.

L'inclinaison du deuxième cône allongé C2 par rapport à l'axe z de propagation est à nouveau contrôlée par la normale N2 de la surface S2 et l'indice du matériau transparent du guide de lumière 9.

Le détecteur 3 comporte alors en outre un détecteur de lumière (par exemple l'unité de détection de lumière représentée en figure 5 et qui sera détaillé plus loin) qui capte de la lumière issue d'une portion importante voire de la totalité de l'espace de détection E situé par exemple sur le circuit imprimé 7, et décalé par rapport à la diode électroluminescente 5, selon la direction x et/ou y.

En alternative, le détecteur de lumière peut être déporté sur un autre circuit imprimé 7, et former un module relativement séparé du module générant les faisceaux C1, C2.

La figure 3 comporte le tracé de deux rayons de lumière issus de la diode électroluminescente 5, représentés par des lignes pointillées orientées selon le sens de propagation. Les rayons sont émis par la diode électroluminescente 5, l'un incliné vers le haut de la figure 3, l'autre vers le bas.

Les rayons lumineux entrent dans le guide de lumière 9 par le dioptre intérieur $\delta_{int}$ où ils sont réfractés une première fois.

Le rayon lumineux incliné vers le haut est réfléchi par la paroi de guidage 6 supérieure du guide de lumière 9 par réflexion totale, et sort ensuite du guide de lumière 9 par le dioptre extérieur $\delta_{ext}$ où il est réfracté une deuxième fois au niveau de la surface S1 et émis dans le cône allongé C1 associé.

Le rayon lumineux incliné vers le bas est réfléchi par la paroi de guidage 6 inférieure du guide de lumière 9 par réflexion totale, et sort ensuite du guide de lumière 9 par le dioptre extérieur $\delta_{ext}$ où il est réfracté une deuxième fois au niveau de la surface S2 et émis dans le cône allongé C2 associé.

Lorsque la main de l'utilisateur U passe dans un des cônes allongés C1, C2, le détecteur de lumière capte la lumière émise par la diode électroluminescente 5 dans lesdits cônes allongés C1, C2, et cette lumière captée est utilisée pour déterminer approximativement une position de la main de l'utilisateur U.

En suivant approximativement la position de la main de l'utilisateur U au cours du temps à partir d'une séquence enregistrée des cônes allongés C1, C2 intersectés au cours du temps, des gestes de l'utilisateur U peuvent être déterminés et interprétés pour lui permettre d'interagir avec le module d'interface 100.

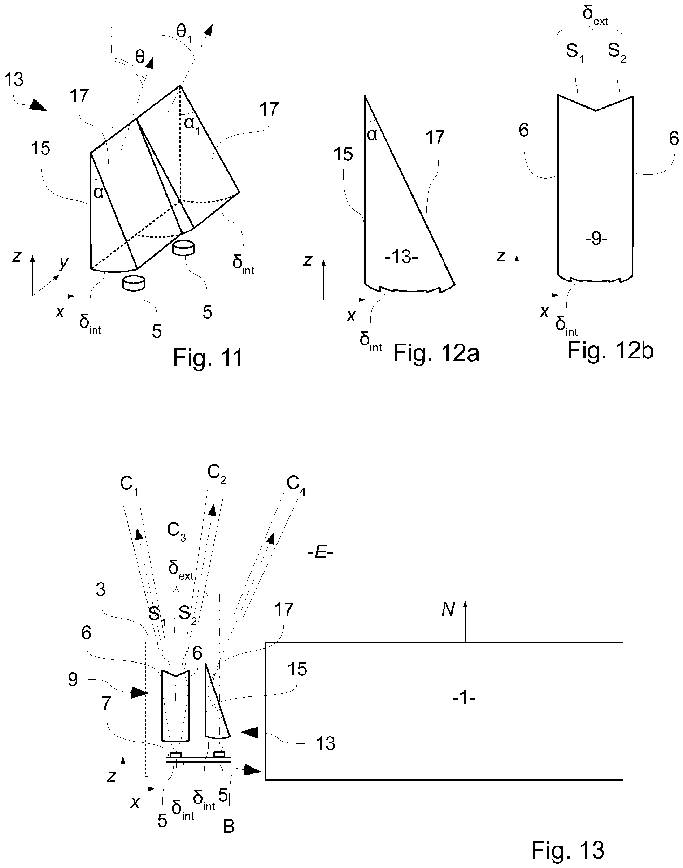

Pour distinguer lequel des cônes C1, C2 est intersecté par l'utilisateur U, un suivi au cours du temps des variations de luminosité détectées peut être utilisé : l'un des cônes C1, C2 est généralement plus incliné par rapport à la surface de l'écran 1 (C1 en figures 7 et 13), ou plus proche de la normale N dudit écran 1. Ce cône plus incliné C1 est quasi systématiquement intersecté en premier lorsque l'utilisateur U approche sa main selon la direction perpendiculaire à l'écran 1 ou bien à partir d'une position au-delà des bords latéraux de l'écran 1.

La figure 5 illustre une unité de détection de lumière d'un mode de réalisation d'un détecteur 3. Il s'agit d'un « pendant » de la figure 3. En effet, en figure 5, le dioptre intérieur $\delta_{int}$ est un dioptre de sortie, et le dioptre extérieur $\delta_{ext}$ est un dioptre d'entrée.

En face du dioptre intérieur $\delta_{int}$ se trouve, dans ce mode de réalisation alternatif, un détecteur de lumière 11 (à la place de la diode électroluminescente 5), par exemple une diode photovoltaïque, avec un éventuel dispositif optique de guidage de lumière comportant par exemple une lentille surmoulée, et/ou des parois tubulaires permettant de sélectionner un cône de détection spécifique afin d'éviter de capter des photons parasites.

Le dioptre intérieur $\delta_{int}$ est alors un dioptre de sortie situé, à l'état monté du guide de lumière 9 face au détecteur de lumière 11. Le dioptre extérieur $\delta_{ext}$ capte alors, du fait de ses deux surfaces S1 et S2, la lumière réfléchie par la main de l'utilisateur U dans les deux cônes C1, C2 allongés transversalement autour des deux plans inclinés dans l'espace de détection E, et envoie la lumière de chacun des deux plans inclinés vers son dioptre intérieur $\delta_{int}$ où elle est captée par le détecteur de lumière 11.

Le trajet de deux rayons lumineux est représenté en figure 5, l'un entrant au niveau du dioptre extérieur $\delta_{ext}$ par le cône allongé supérieur C1 en figure 5, l'autre par le cône allongé C2 inférieur en figure 5.

Les deux rayons lumineux sont guidés par réflexion totale sur les parois de guidage 6 (en yz) du guide de lumière 9 jusqu'au dioptre intérieur $\delta_{int}$ où ils sont réfractés puis captés par le détecteur de lumière 11.

On comprend ainsi que dans ce mode de réalisation de la figure 5, en inversant simplement la position des diodes 5 et des détecteurs 11, on obtient un capteur de geste 3 qui fonctionne avec des rayons qui suivent des trajets similaires, mais simplement en sens inverse : ils sont captés là où ils sont initialement émis dans le mode de réalisation de la figure 3, et émis là où ils sont initialement captés dans le mode de réalisation de la figure 3.

En alternative ou en complément, le capteur de geste 3 peut comporter respectivement plusieurs détecteurs 11 dans le cas de la figure 3, ou plusieurs diodes 5 dans le cas de la figure 5. Ces détecteurs 11 ou diodes 5 captent ou émettent alors de la lumière spécifiquement dans une portion de l'espace de détection E contenant un seul des cônes C1, C2. En déterminant à quel détecteur 11 ou quelle diode 5 correspond à la lumière captée ou émise, on peut alors savoir quel cône C1, C2 est intersecté.

Le détecteur 3 comporte alors au moins une source de lumière, comportant notamment une ou plusieurs diodes électroluminescentes 5, qui émet de la lumière dans tout l'espace de détection E. Les diodes électroluminescentes 5 de la source de lumière peuvent notamment être disposées sur le même circuit imprimé 7 que les détecteur de lumière 11, ou bien former un module relativement séparé, avec son propre circuit imprimé 7.

La figure 6 est une représentation en coupe (xz) d'un mode de réalisation alternatif de détecteur 3 dérivé du mode de réalisation de la figure 3, permettant une meilleure distinction logique du cône intersecté C1 ou C2.

Dans ce mode de réalisation, le dioptre intérieur $\delta_{int}$ comporte deux surfaces S3, S4 formant des lentilles convergentes, conjuguées chacune avec une des surfaces S1, S2 du dioptre extérieur $\delta_{ext}$. Dans le mode de réalisation de la figure 6, le dioptre intérieur $\delta_{int}$ est situé en face de deux diodes électroluminescentes 51, 53, entre lesquelles est disposée une lame séparatrice 55, opaque dans le domaine spectral utilisé.

La lumière issue de la première diode 51 est guidée par réflexion interne jusqu'à la surface S1 et émise majoritairement dans le cône allongé C1 associé. De même, la lumière issue de la deuxième diode 53 est guidée par réflexion interne jusqu'à la surface S2 et émise majoritairement dans le cône allongé C2 associé.

En allumant en alternance rapide (fréquence supérieure à plusieurs dizaines de Hertz) chacune des diodes 51, 53 et en déterminant dans quelle fenêtre temporelle la lumière captée a été émise, il est alors possible de déterminer rapidement quel cône lumineux C1 ou C2 est intersecté par la main de l'utilisateur U dans l'espace de détection E en utilisant un seul détecteur de lumière.

Un autre mode de réalisation (non représenté) est obtenu de façon analogue à partir du mode de réalisation de la figure 5. Le dioptre intérieur $\delta_{int}$ comporte alors deux surfaces formant des lentilles convergentes, conjuguées chacune avec une des surfaces S1, S2 du dioptre extérieur $\delta_{ext}$, et en face dudit dioptre intérieur $\delta_{int}$ se trouvent alors deux détecteurs de lumière 11 séparés par une lame séparatrice 55 opaque au domaine spectral utilisé.

La lumière entrant par chacun des cônes C1 et C2 est alors majoritairement guidée vers l'un ou l'autre des détecteurs de lumière 11 selon un sens de propagation inverse de celui de la figure 6.

La figure 7 illustre la disposition des éléments des précédentes figures par rapport à l'écran 1 dans le cadre d'un détecteur 3 disposé le long d'un bord B dudit écran 1.

Le guide de lumière 9 est disposé avec son axe optique z incliné par rapport à la normale N verticale de l'écran 1 qui est ici représenté horizontal. Le circuit imprimé 7 portant ici la diode électroluminescente 5, qui est orthogonal audit axe optique z, est lui aussi incliné par rapport au plan horizontal de la figure 7. L'angle d'inclinaison est par exemple un angle compris entre 0° et 45°. L'angle 0°, correspondant au cas où xy est coplanaire à l'écran 1, est préférable si possible, puisqu'un seul circuit imprimé 7 peut alors connecter à la fois les éléments du capteur 3 et de l'écran 1 (voir figure 13).

Le détecteur 3 peut alors être recouvert d'un cache transparent au domaine spectral utilisé (infrarouges), et opaque dans le domaine visible pour l'œil humain. On peut ainsi rendre le ou les capteurs de gestes 3 invisibles pour l'utilisateur U. Le cache peut soit être un cadre rigide formant éventuellement aide au maintien et à la fixation de l'écran 1, ou bien être imprimé sur un film ou une plaque protectrice qui recouvre l'écran 1 et s'étend au-delà des bords dudit écran 1 de manière à recouvrir le ou les capteurs de gestes 3 disposés le long des bords de l'écran 1 en même temps que ledit écran 1.

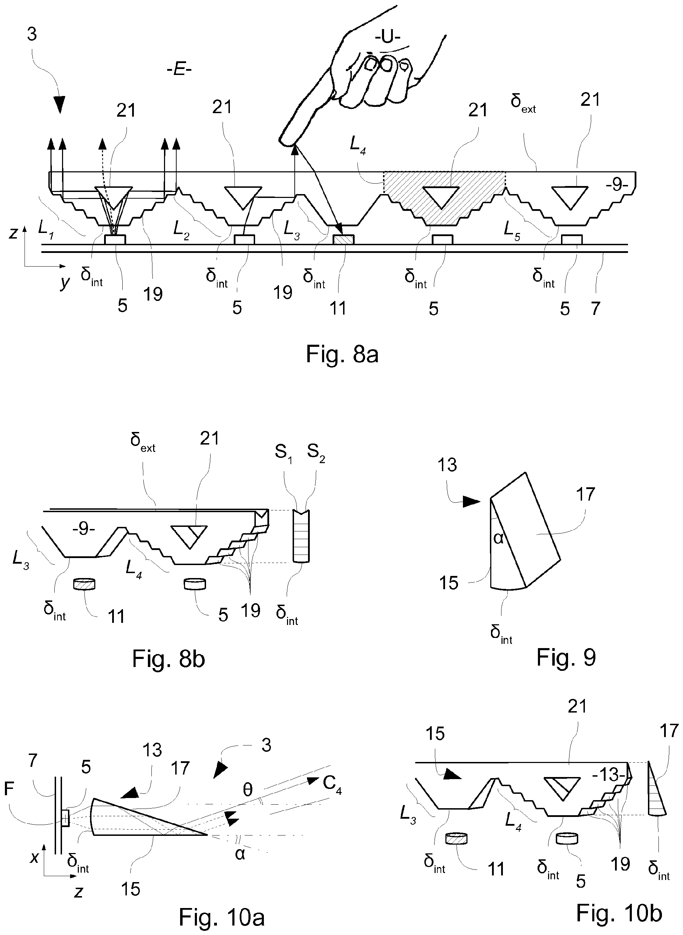

La figure 8a est une vue dans le plan yz d'un guide de lumière 9 avec le circuit imprimé 9 en dessous, selon un mode de réalisation particulier adapté aux écrans 1 de taille importante. La figure 8b est une vue en perspective d'une portion longitudinale (en y) du guide de lumière 9 de la figure 8a, avec la section selon le plan vertical transverse xz correspondante.

Dans ce mode de réalisation, le guide de lumière 9 comporte une pluralité de dioptres intérieurs $\delta_{int}$ situés chacun en face d'une diode électroluminescente 5 ou d'un détecteur de lumière 11, le long de l'axe transverse y.

Le mode de réalisation de la figure 8 comporte en particulier quatre diodes électroluminescentes 5 et un détecteur de lumière 11, avec deux diodes électroluminescentes 5 disposées de chaque côté du détecteur de lumière 11 sur le circuit imprimé 7 le long d'une ligne transverse sur le circuit imprimé 7.

Les dioptres intérieurs $\delta_{int}$ sont séparés par des parois inclinées 19, évasées en direction de l'espace de détection E. Les parois inclinées 19 délimitent ainsi des lobes numérotés L1 à L5 en partant de la gauche de la figure 8. Le lobe central L3 est celui en face du détecteur de lumière 11. Les lobes L1 à L5 sont en forme de pyramide tronquée, dont le dioptre intérieur $\delta_{int}$ est au niveau de la pointe tronquée, située vers l'intérieur du module d'interface 100.

Le lobe L4 est hachuré en figure 8a, la figure 8b représente seulement deux lobes L1, L3 considérés séparément.

Le guide de lumière 9 est en particulier réalisé d'une seule pièce : les lobes L1 à L5 sont unis par leur portion supérieure en se rejoignant par leur côté évasé en direction du dioptre extérieur $\delta_{ext}$. D'autres modes de réalisation peuvent être obtenus en réalisant séparément chacun des lobes L1 à L5, et en les disposant alignés parallèlement au bord de l'écran 1 selon la direction transverse y.

Les lobes L1, L2, L4 et L5 (ceux situés en face d'une diode électroluminescente 5) ont des parois latérales évasées 19 réalisées sous forme de marches, alternant des faces dans le plan xy du circuit imprimé 7 et des faces inclinées formant l'évasement.

Le lobe L3 faisant face au détecteur de lumière 11 présente des parois latérales évasées 19 droites, et une section en trapèze.

Les lobes L1, L3 de la figure 8b sont pour l'un L1 à parois en forme de marches, et pour l'autre L3 à section en trapèze.

Les lobes L1, L2, L4 et L5 comprennent en leur centre des cavités prismatiques 21 selon la direction transverse x perpendiculaire à l'axe le long duquel sont alignés lesdits lobes. Les cavités prismatiques 21 des lobes L1, L2, L4 et L5 ont une section selon le plan yz de la figure 8 en forme de triangle, en particulier isocèle, dont la base est orientée vers l'espace de détection E, et la pointe est orientée vers la diode électroluminescente 5.

Ces cavités prismatiques 21 permettent de dévier par réflexion totale une partie des rayons lumineux émis par la diode 5 vers les parois inclinées 19 avec une inclinaison transverse importante (bords transverses du faisceau). Au niveau desdites parois inclinées 19, ces rayons lumineux sont à nouveau déviés par réflexion totale en direction du dioptre extérieur $\delta_{ext}$ où ils sont émis en direction de l'espace de détection E dans les cônes C1 et C2 (non représentés en figure 8a).

Des rayons lumineux suivant un tel parcours sont représentés en lignes pleines au niveau du lobe L1 à gauche en figure 8a.

Les rayons lumineux relativement centraux et axiaux du faisceau émis par la diode électroluminescente 5 considérée sont simplement réfractés au niveau de la cavité prismatique 21, et forment une portion centrale relativement peu déviée des faisceaux lumineux émis par chacun des lobes L1, L2, L4 et L5.

Un rayon suivant un tel parcours est représenté en ligne pointillée au niveau du lobe L1 à gauche en figure 8a.

Les lobes L1, L2, L4 et L5 avec leurs cavités prismatiques 21 permettent ainsi de répartir de façon relativement uniforme la lumière des diodes électroluminescentes 5 le long de la direction transverse y parallèle au bord de l'écran 1 dans les cônes C1 et C2.

En alternative ou en complément, le détecteur 3 peut comporter un ou plusieurs seconds guides de lumière 13 tels que représentés en figure 9.

Le second guide de lumière 13 est représenté en figure 9 en vue en perspective, à la manière du premier guide de lumière 9 en figure 4.

Le même second guide de lumière 13 est représenté en vue dans le plan latéral xz en figure 10a, dans le cadre d'un détecteur 3. La figure 10a est similaire à la figure 3 ou 5.

Le second guide de lumière 13 comporte un dioptre intérieur $\delta_{int}$ situé, à l'état monté, face au circuit imprimé 7 portant une source de lumière 5, ici une diode électroluminescente, ou bien un détecteur de lumière 11. Le dioptre intérieur $\delta_{int}$ forme une lentille convergente dont le foyer F est situé au niveau d'une position attendue de la diode électroluminescente 5 ou du détecteur de lumière 11.

Le second guide de lumière 13 est de forme générale en prisme, avec une première face plane 15 parallèle à l'axe z, sensiblement contenue dans le plan yz, et une deuxième face plane 17 inclinée par rapport à la première face plane 15 avec un angle a.

Le second guide de lumière 13 peut notamment être obtenu par moulage d'un matériau plastique tel que du polycarbonate, en particulier par moulage par injection.

Dans le mode de réalisation de la figure 10a, le dioptre intérieur $\delta_{int}$ est un dioptre d'entrée : le dioptre intérieur $\delta_{int}$ fait face à une diode électroluminescente 5 et le faisceau lumineux émis par ladite diode électroluminescente 5 entre dans le second guide de lumière 13 via le dioptre intérieur $\delta_{int}$.

Le faisceau lumineux émis par la diode électroluminescente 5, qui se trouve au niveau du foyer F est collimaté par le dioptre intérieur $\delta_{int}$. Les rayons parallèles et axiaux (axe z) dans le second guide de lumière 13 sont réfléchis une première fois par réflexion totale sur la deuxième face plane 17, puis une seconde fois par réflexion totale sur la première face plane 15.

Les rayons lumineux rencontrent alors une deuxième fois la deuxième face plane 17, mais ils ont alors un angle d'incidence suffisamment important pour ne pas être totalement réfléchis, et sortent alors par ladite deuxième face plane 17 avec un angle θ par rapport à l'axe z.

La deuxième face plane 17 forme ainsi à la fois une paroi réfléchissante et un dioptre de sortie $\delta_{ext}$ du second guide de lumière 13.

Le second guide de lumière 13 émet ainsi un faisceau selon un cône C4 allongé selon la direction transverse y, centré autour d'un plan incliné avec la direction z d'un angle θ, avec une ouverture angulaire relativement faible.

L'angle α et l'angle θ sont liés par la relation :

$$\cos(\alpha+\theta) = (1+\varepsilon)\, n_{GL} \,^* \cos 3\alpha,$$

dans laquelle :

- ε un nombre compris entre -0,1 et 0,1 ;

- et $n_{GL}$ l'indice du matériau transparent dont est constitué le second guide de lumière 13.

Le nombre ε rend ici compte des incertitudes de dimensionnement et de fabrication du second guide de lumière 13 et de disposition des diodes 5 et/ou capteurs 11, et peut être plus petit si une précision suffisante le permet. Le nombre ε peut alors, par exemple, être compris entre -0,01 et 0,01 (1% d'erreur) avec un usinage et un assemblage plus précis.

En particulier, une égalité rigoureuse (aux tolérances d'usinage près) peut être obtenue, l'angle α et l'angle θ sont alors sensiblement liés par la relation :

$$\cos(\alpha+\theta) = n_{GL} \,^* \cos 3\alpha.$$

Ce cas de figure correspond à ε = 0 ou de façon plus réaliste à un taux d'erreur négligeable.

Selon un autre mode de réalisation selon lequel un détecteur photovoltaïque 11 est disposé à la place de la diode électroluminescente 5, le dioptre intérieur $\delta_{int}$ est un dioptre de sortie. Le circuit imprimé 7 porte alors un détecteur de lumière 11, situé en face du dioptre intérieur $\delta_{int}$, et qui recueille de la lumière entrant dans le second guide de lumière 13 par le cône C4 par la deuxième face plane 17, et sort dudit second guide de lumière 13 par le dioptre intérieur $\delta_{int}$ en étant focalisée au niveau du foyer F où se trouve le détecteur de lumière 11.

Le second guide de lumière 13 permet d'obtenir des angles d'émission θ importants, en particulier supérieurs à 25°, et notamment compris entre 30° et 45° en utilisant du polycarbonate d'indice $n_{GL}$ usuel, c'est-à-dire compris entre 1,4 et 1,6.

Lorsque le dioptre intérieur $\delta_{int}$ est un dioptre d'entrée, le détecteur 3 comporte en outre au moins un détecteur de lumière 11, qui capte la lumière réfléchie par la main de l'utilisateur U dans la totalité de l'espace de détection E, la détermination approximative de la position de la main de l'utilisateur U s'effectuant en déterminant de quels faisceaux intersectés provient la lumière détectée.

Lorsque le dioptre intérieur $\delta_{int}$ est un dioptre de sortie, le détecteur 3 comporte en outre au moins une source de lumière 5, qui émet dans tout l'espace de détection de la lumière, réfléchie par la main de l'utilisateur U et captée lorsqu'elle est réfléchie au niveau du détecteur 3 selon les faisceaux C1, C2 ou C4, la détermination approximative de la position de la main de l'utilisateur U s'effectuant en déterminant dans quels faisceaux C1, C2 ou C4 la lumière détectée est incidente.

En référence à la figure 10b, la forme longitudinale dans le plan yz du second guide de lumière 13 peut être identique à celle du guide de lumière 9 représenté en figure 8a. La figure 10b est une vue en perspective d'une portion longitudinale (en y) d'un second guide de lumière 13 avec la forme longitudinale de la figure 8a, avec la section en forme générale de prisme selon le plan vertical transverse xz correspondante.

Le second guide de lumière 13 comporte alors lui aussi une pluralité de lobes L1, L2, L3, L4 et L5 (sur la figure 10b, seuls les lobes L3 et L4 sont représentés) selon la direction y, avec chacun un dioptre intérieur $\delta_{int}$ situé en vis-à-vis d'une diode électroluminescente 5 ou d'un détecteur de lumière 11.

Un sous-ensemble L1, L2, L4 et L5 des lobes peut alors présenter des parois latérales évasées 19 réalisées sous forme de marches, et au moins un L3 des lobes peut présenter une section trapézoïdale.

Une partie des lobes L1 à L5 peut aussi comporter des cavités prismatiques 21 telles que décrites dans le cas des figures 8a, 8b.

La lumière est alors émise dans le cône C4 avec une intensité relativement uniforme selon la direction y parallèle au bord de l'écran 1 dans laquelle ledit cône C4 est allongé.

La figure 11 illustre le mode de réalisation principal, dans lequel le second guide de lumière 13 comporte plusieurs sections transverses selon l'axe y, avec chacune un dioptre intérieur $\delta_{int}$. Les premières faces planes 15 de ces sections transversales sont situées dans un même plan, et les deuxièmes faces 17 inclinées par rapport aux premières faces planes forment avec celles-ci deux angles α et α1 qui sont différents. Il en résulte une «marche» dans le plan xz au niveau de l'interface entre les deux portions transverses.

Le second guide de lumière 13 est alors placé en vis-à-vis de deux diodes électroluminescentes 5 (figure 11) ou bien face à deux détecteurs de lumière 11 (non représenté) alignés selon la direction transverse y.

Le guide de lumière 13 ainsi obtenu émet donc deux faisceaux inclinés selon des angles θ et $\theta_1$ reliés au deux angles α et α1 par les relations :

$$\cos(\alpha+\theta) = (1+\varepsilon)\, n_{GL} \,^* \cos 3\alpha$$

et

$$\cos(\alpha_1+\theta_1) = (1+\varepsilon)\, n_{GL} \,^* \cos 3\alpha_1.$$

D'autres modes de réalisation peuvent être obtenus avec plus de deux sections transverses, ayant cha-

cune une inclinaison a, $\alpha_1$, $\alpha_2$,..., $\alpha_n$ potentiellement différente, et autant de diodes électroluminescentes 5 et/ou de détecteurs de lumière 11.

Le second guide de lumière 13 émet ou recueille alors selon des portions transverses de faisceau avec différents angles d'inclinaison $\theta$, $\theta_1$, $\theta_2$,..., $\theta_n$.

En particulier, les sections transverses à inclinaison différente peuvent correspondre à des lobes L1 à L5 en partant d'un guide de lumière avec une forme longitudinale dans le plan yz telle qu'en figure 10b.

Les sections transverses ont alors chacune un dioptre intérieur $\delta_{int}$ en face respectivement d'une des diodes électroluminescentes 5 ou d'un détecteur de lumière 11, qui peuvent être allumées selon des fenêtres temporelles différentes pour permettre d'identifier quelle portion transverse de faisceau est intersectée par l'utilisateur U.

Les figures 12a et 12b sont des vue en coupe selon le plan xz de modes de réalisation alternatifs des premier et second guide de lumière 9 et 13 respectivement, dans lesquelles le dioptre intérieur $\delta_{int}$ est réalisé sous forme d'une lentille de Fresnel, et la source de lumière 5 ou le détecteur de lumière 11 en face du dioptre intérieur est situé au niveau du foyer de la lentille de Fresnel.

Leur dioptre intérieur $\delta_{int}$ présente alors des anneaux concentriques emboîtés, dont la surface extérieure se conforme par segments à une lentille convexe.

On peut ainsi rendre les guides de lumière 9, 13 plus compacts selon la direction z.

Le second guide de lumière 13 peut lui aussi présenter une section transverse selon le plan yz telle que représentée en figure 8, avec plusieurs dioptres intérieurs $\delta_{int}$, alignés selon un axe transverse y du guide de lumière, destinés à être disposés chacun au niveau d'une source de lumière 5 ou d'un détecteur de lumière 11, séparés par des parois délimitant des lobes L1 à L5 avec des cavités prismatiques 21.

La figure 13 est une vue en coupe partielle dans le plan transverse xz du module d'interface 100 comportant l'écran 1 et le détecteur 3.

La figure 13 est semblable à la figure 7, mais en figure 13, le détecteur 3 comporte un premier guide de lumière 9 tel que représenté dans les figures 3 à 8 et 12b, et un second guide de lumière 13 tel que représenté dans les figures 9 à 11 et 12a.

Le premier et le second guide de lumière 9, 13 sont disposés sur un même circuit imprimé 7, avec leurs axe transverse y parallèles entre eux et au bord de l'écran 1, l'axe z orthogonal au circuit imprimé 7 est incliné par rapport à la normale N à l'écran 1, par exemple d'un angle compris entre 10° et 45°.

Les faisceaux C1, C2 et C4 des guides de lumière 9 et 13 sont alors disposés dans l'espace de détection E avec des angles par rapport à la normale N à l'écran 1 croissants.

Le premier faisceau émis par le premier guide de lumière 9 dans le cône C1 est presque vertical, formant un premier plan de détection. Le deuxième faisceau dans le cône C2 du premier guide de lumière 9 est plus incliné que le premier faisceau dans le cône C1, et forme un deuxième plan de détection. Le troisième faisceau émis dans le cône C4 est encore plus incliné par rapport à la normale N à l'écran 1.

Le module d'interface 100 est notamment pourvu d'au moins un deuxième détecteur 3, notamment identique au premier, situé le long d'un bord perpendiculaire de l'écran 1.

Avec deux capteurs de gestes 3 perpendiculaires avec chacun trois plans de détection, l'espace de détection E est divisé en neuf ($3^2$) parcelles dans le plan de l'écran 1, ce qui permet notamment l'interprétation de gestes simples tels que des balayages, cercles ou croix.

L'utilisation combinée des deux guides de lumière 9, 13 permet de placer l'électronique de génération et de détection de la lumière (sources 5 et détecteurs 11, adaptation et distribution de puissance, etc.) sur un seul circuit imprimé 7, au lieu de recourir à trois capteurs de gestes 3 orientés selon des directions différentes pour former chacun des trois plans de détection, ce qui suppose que chacun ait son propre circuit imprimé 7, orienté en fonction de la direction du détecteur 3 auquel il appartient.

Le détecteur 3 ainsi obtenu, et le module d'interface 100 qui l'intègre, est alors potentiellement plus compact, plus léger, et d'assemblage plus aisé. Il en résulte que le module d'interface 100 peut être intégré dans des habitacles de véhicule moins spacieux, ou bien en présence d'autres éléments d'interface adjacents.

**Revendications**

1. Guide de lumière pour module d'interface, en particulier pour habitacle de véhicule, pour l'émission ou la réception d'un faisceau lumineux dans un cône allongé selon une direction transversale et centré autour d'un plan incliné d'un angle $\theta$ par rapport à un axe optique (z) du guide de lumière, réalisé sous forme de prisme en matériau transparent d'indice $n_{GL}$ comportant :

   • un dioptre intérieur ($\delta_{int}$) destiné à faire face à un circuit imprimé (7) portant une source de lumière (5) ou un détecteur de lumière (11), formant une lentille convergente dont le foyer est situé au niveau d'une position attendue de la source (5) ou du détecteur de lumière (11),
   • une première face plane (15) orientée parallèlement à l'axe optique (z) du guide de lumière,
   • une deuxième face plane (17) inclinée par rapport à la première face plane (15) avec un angle a, vérifiant $\cos(\alpha+\theta) = (1+\varepsilon)\, n_{GL}{}^* \cos 3a$ avec $\varepsilon$ un nombre compris entre -0,1 et 0,1,
   et **caractérisé en ce qu'**il comporte plusieurs dioptres intérieurs ($\delta_{int}$), alignés selon un axe longitudinal (y) du guide de lumière, destinés à être disposés chacun au niveau d'une source de lumière (5) ou d'un détecteur de lumière (11) et **en ce qu'**il comporte au moins une portion transversale dont la deuxième face plane (17) forme un angle $\alpha_1$ différent de l'angle $\alpha$ avec la première face plane (15) pour émettre des portions transverses de faisceau selon un angle $\theta_1$ relié à l'angle $\alpha_1$ par la relation $\cos(\alpha_1+\theta_1) = (1+\varepsilon)\,n_{GL}\,*\cos 3\alpha_1$ avec $\varepsilon$ un nombre compris entre -0,1 et 0,1.

2. Guide de lumière selon la revendication 1, **caractérisé en ce que** le dioptre intérieur ($\delta_{int}$) est un dioptre d'entrée situé, à l'état monté du guide de lumière, en face d'une source de lumière (5).

3. Guide de lumière selon la revendication 1, **caractérisé en ce que** le dioptre intérieur ($\delta_{int}$) est un dioptre de sortie situé, à l'état monté du guide de lumière, en face d'un détecteur de lumière (11).

4. Guide de lumière selon l'une des revendications précédentes, **caractérisé en ce que** le dioptre intérieur ($\delta_{int}$) est réalisé sous forme d'une lentille de Fresnel, et **en ce que** la source de lumière (5) ou le détecteur de lumière (11) en face du dioptre intérieur est situé au niveau du foyer de la lentille de Fresnel.

5. Guide de lumière selon l'une des revendications précédentes, **caractérisé en ce que** l'angle $\theta$ est supérieur à 25°, en particulier compris entre 30° et 45°.

6. Module d'interface, en particulier pour habitacle de véhicule, à détection de présence ou de gestes d'une partie du corps d'un utilisateur (U), comportant :

   ◦ au moins une source de lumière (5), destinée à éclairer au moins une partie d'un espace de détection (E) du module d'interface,
   ◦ au moins un détecteur de lumière (11), destiné à détecter de la lumière de la source (5) renvoyée par une partie du corps d'un utilisateur (U) située dans l'espace de détection (E), **caractérisé en ce qu'**il comporte en outre un guide de lumière (13) selon l'une des revendications précédentes, configuré pour émettre ou recueillir la lumière dans un faisceau (C4) centré autour d'un plan incliné par rapport à l'axe optique (z) d'un angle $\theta$ supérieur à 25°, en particulier compris entre 30° et 45°.

7. Module d'interface selon la revendication précédente, **caractérisé en ce qu'**il comporte en outre :

   • respectivement au moins deux sources de lumière (5) ou au moins deux détecteurs de lumière (11), arrangés sur un circuit imprimé (7),

   • respectivement au moins un détecteur (11) ou au moins une source de lumière (5), couvrant tout l'espace de détection (E),
   • un premier guide de lumière selon l'une des revendications 1 à 10, disposé en face d'au moins une des sources de lumière (5) ou un des détecteurs de lumière (11) du circuit imprimé (7),
   • un second guide de lumière (9), comportant un corps en matériau transparent ou translucide guidant de la lumière par réflexion sur ses parois latérales, comportant :

      ◦ un dioptre intérieur ($\delta_{int}$) du second guide de lumière (9) à une des extrémités du corps transparent ou translucide, destiné à être dirigée vers un détecteur de lumière (11) ou une ou plusieurs sources de lumière (5),
      ◦ un dioptre extérieur ($\delta_{ext}$), situé à une extrémité opposée au dioptre intérieur ($\delta_{int}$) du corps en matériau transparent,
      ◦ **caractérisé en ce que** le dioptre extérieur ($\delta_{ext}$) du second guide de lumière (9) comporte deux surfaces transverses distinctes (S1, S2), avec des normales pointant dans des directions différentes pour conjuguer de la lumière entre d'une part deux portions séparées (C1, C2) de l'espace de détection (E) et le dioptre intérieur ($\delta_{int}$) du second guide de lumière (9) d'autre part.

8. Module d'interface selon la revendication précédente, **caractérisé en ce que** les deux portions séparées (C1, C2) de l'espace de détection (E) sont deux cônes allongés transversalement, situés autour de deux plans inclinés par rapport à une hauteur (z) du premier guide de lumière avec des angles inférieurs à l'angle $\theta$.

9. Module d'interface selon la revendication 7 ou 8, **caractérisé en ce que** les sources (5) et/ou les détecteurs (11) de lumière associés au premier et au second guide de lumière (9, 13) sont disposés sur un même circuit imprimé (7).

**Patentansprüche**

1. Lichtleiter für ein Schnittstellenmodul, insbesondere für einen Fahrzeuginnenraum, für die Emission oder den Empfang eines Lichtbündels in einem Konus, der sich gemäß einer Querrichtung erstreckt und um eine Ebene zentriert ist, die um einen Winkel $\theta$ bezüglich einer optischen Achse (z) des Lichtleiters geneigt ist, hergestellt in Form eines Prismas aus durchsichtigem Material mit einem Index $n_{GL}$, der aufweist:

   • einen inneren Diopter ($\delta_{int}$), der dazu bestimmt

ist, einer Leiterplatte (7) gegenüber zu liegen, die eine Lichtquelle (5) oder einen Lichtdetektor (11) trägt, der eine konvergierende Linse formt, deren Brennpunkt sich im Bereich einer erwarteten Position der Lichtquelle (5) oder des Lichtdetektors (11) befindet,

• eine erste ebene Seite (15), die parallel zur optischen Achse (z) des Lichtleiters ausgerichtet ist,

• eine zweite ebene Seite (17), die bezüglich der ersten ebenen Seite (15) mit einem Winkel $\alpha$ geneigt ist, der $\cos(\alpha+\theta) = (1+\varepsilon)n_{GL}*\cos3\alpha$ erfüllt, mit $\varepsilon$ einer Zahl zwischen -0,1 und 0,1,

und **dadurch gekennzeichnet, dass** er mehrere gemäß einer Längsachse (y) des Lichtleiters ausgerichtete innere Diopter ($\delta_{int}$) aufweist, die dazu bestimmt sind, je im Bereich einer Lichtquelle (5) oder eines Lichtdetektors (11) angeordnet zu sein,

und dass er mindestens einen Querabschnitt aufweist, dessen zweite ebene Seite (17) einen Winkel $\alpha_1$ anders als der Winkel $\alpha$ mit der ersten ebenen Seite (15) formt, um Bündelquerabschnitte gemäß einem Winkel $\theta_1$ zu liefern, der mit dem Winkel $\alpha_1$ durch die Beziehung $\cos(\alpha_1+\theta_1) = (1+\varepsilon)n_{GL}*\cos3\alpha_1$ verbunden ist, mit $\varepsilon$ einer Zahl zwischen -0,1 und 0,1.

2. Lichtleiter nach Anspruch 1, **dadurch gekennzeichnet, dass** der innere Diopter ($\delta_{int}$) ein Eingangsdiopter ist, der sich im montierten Zustand des Lichtleiters gegenüber einer Lichtquelle (5) befindet.

3. Lichtleiter nach Anspruch 1, **dadurch gekennzeichnet, dass** der innere Diopter ($\delta_{int}$) ein Ausgangsdiopter ist, der sich im montierten Zustand des Lichtleiters gegenüber einem Lichtdetektor (11) befindet.

4. Lichtleiter nach einem der vorhergehenden Ansprüche, **dadurch gekennzeichnet, dass** der innere Diopter ($\delta_{int}$) in Form einer Fresnel-Linse hergestellt wird, und dass die Lichtquelle (5) oder der Lichtdetektor (11) gegenüber dem inneren Diopter sich im Bereich des Brennpunkts der Fresnel-Linse befindet.

5. Lichtleiter nach einem der vorhergehenden Ansprüche, **dadurch gekennzeichnet, dass** der Winkel $\theta$ größer als 25° ist, insbesondere zwischen 30° und 45° liegt.

6. Schnittstellenmodul, insbesondere für einen Fahrzeuginnenraum, mit Erfassung der Anwesenheit oder von Gesten eines Teils des Körpers eines Benutzers (U), das aufweist:

o mindestens eine Lichtquelle (5), die dazu bestimmt ist, mindestens einen Teil eines Erfassungsraums (E) des Schnittstellenmoduls zu beleuchten,

o mindestens einen Lichtdetektor (11), der dazu bestimmt ist, Licht der Quelle (5) zu erfassen, das von einem Teil des Körpers eines Benutzers (U) zurückgeschickt wird, der sich im Erfassungsraum (E) befindet,

**dadurch gekennzeichnet, dass** es außerdem einen Lichtleiter (13) nach einem der vorhergehenden Ansprüche aufweist, der konfiguriert ist, das Licht in einem Bündel (C4) zu emittieren oder aufzufangen, das um eine bezüglich der optischen Achse (z) um einen Winkel $\theta$ größer als 25°, insbesondere zwischen 30° und 45°, geneigte Ebene zentriert ist.

7. Schnittstellenmodul nach dem vorhergehenden Anspruch, **dadurch gekennzeichnet, dass** es außerdem aufweist:

• je mindestens zwei Lichtquellen (5) oder mindestens zwei Lichtdetektoren (11), die auf einer Leiterplatte (7) angeordnet sind,
• je mindestens einen Lichtdetektor (11) oder mindestens eine Lichtquelle (5), die den ganzen Erfassungsraum (E) abdecken,
• einen ersten Lichtleiter nach einem der Ansprüche 1 bis 10, der gegenüber mindestens einer der Lichtquellen (5) oder einem der Lichtdetektoren (11) der Leiterplatte (7) angeordnet ist,
• einen zweiten Lichtleiter (9), der einen Körper aus einem durchsichtigen oder durchscheinenden Material aufweist, der Licht durch Reflexion auf seinen Seitenwänden leitet, der aufweist:

o einen inneren Diopter ($\delta_{int}$) des zweiten Lichtleiters (9) an einem der Enden des durchsichtigen oder durchscheinenden Körpers, der dazu bestimmt ist, zu einem Lichtdetektor (11) oder zu einer oder mehreren Lichtquellen (5) gelenkt zu werden,
o einen äußeren Diopter ($\delta_{ext}$), der sich an einem dem inneren Diopter ($\delta_{int}$) des Körpers aus durchsichtigem Material entgegengesetzten Ende befindet,

**dadurch gekennzeichnet, dass** der äußere Diopter ($\delta_{ext}$) des zweiten Lichtleiters (9) zwei unterschiedliche Querflächen (S1, S2) mit in unterschiedliche Richtungen weisenden Normalen aufweist, um Licht zwischen einerseits zwei getrennten Abschnitten (C1, C2) des Erfassungsraums (E) und andererseits dem inneren Diopter ($\delta_{int}$) des zweiten Lichtleiters (9) in Einklang zu bringen.

8. Schnittstellenmodul nach dem vorhergehenden Anspruch, **dadurch gekennzeichnet, dass** die zwei getrennten Abschnitte (C1, C2) des Erfassungsraums (E) zwei sich quer erstreckende Konen sind, die sich um zwei Ebenen herum befinden, die bezüglich einer Höhe (z) des ersten Lichtleiters mit Winkeln kleiner als der Winkel θ geneigt sind.

9. Schnittstellenmodul nach Anspruch 7 oder 8, **dadurch gekennzeichnet, dass** die dem ersten und dem zweiten Lichtleiter (9, 13) zugeordneten Lichtquellen (5) und/oder Lichtdetektoren (11) auf einer gleichen Leiterplatte (7) angeordnet sind.

**Claims**

1. Light guide for an interface module, in particular for a vehicle passenger compartment, for emitting or receiving a light beam in a cone extending in a transverse direction and centred about a plane inclined by an angle θ with respect to an optical axis (z) of the light guide, implemented in the form of a prism made of transparent material of index $n_{GL}$, comprising:

   • an internal dioptre ($\delta_{int}$) intended to face a printed circuit board (7) carrying a light source (5) or a light detector (11), forming a convergent lens the focal point of which is located at an expected position of the light source (5) or of the light detector (11),
   • a first planar face (15) oriented parallel to the optical axis (z) of the light guide,
   • a second planar face (17) inclined with respect to the first planar face (15) by an angle a, satisfying $\cos(\alpha+\theta) = (1+\varepsilon)\, n_{GL} * \cos3\alpha$, where $\varepsilon$ is a number between -0.1 and 0.1,
   and **characterized in that** it comprises multiple internal dioptres ($\delta_{int}$) aligned along a longitudinal axis (y) of the light guide and each intended to be arranged at the location of a light source (5) or of a light detector (11),
   and **in that** it comprises at least one transverse portion the second planar face (17) of which forms an angle $\alpha_1$ different from the angle $\alpha$ with the first planar face (15) so as to emit transverse beam portions at an angle $\theta_1$ linked to the angle $\alpha_1$ by the relationship $\cos(\alpha_1+\theta_1) - (1+\varepsilon)\, n_{GL} * \cos3\alpha_1$, where $\varepsilon$ is a number between -0.1 and 0.1.

2. Light guide according to Claim 1, **characterized in that** the internal dioptre ($\delta_{int}$) is an entry dioptre located, in the installed state of the light guide, facing a light source (5).

3. Light guide according to Claim 1, **characterized in that** the internal dioptre ($\delta_{int}$) is an exit dioptre located, in the installed state of the light guide, facing a light detector (11).

4. Light guide according to one of the preceding claims, **characterized in that** the internal dioptre ($\delta_{int}$) is implemented in the form of a Fresnel lens, and **in that** the light source (5) or the light detector (11) facing the internal dioptre is located at the focal point of the Fresnel lens.

5. Light guide according to one of the preceding claims, **characterized in that** the angle θ is greater than 25°, in particular between 30° and 45°.

6. Interface module, in particular for a vehicle passenger compartment, for detecting the presence of or gestures performed by a body part of a user (U), comprising:

   o at least one light source (5), intended to illuminate at least part of a detection space (E) of the interface module,
   o at least one light detector (11), intended to detect light from the source (5) returned by a body part of a user (U) located in the detection space (E),

   **characterized in that** it furthermore comprises a light guide (13) according to one of the preceding claims, configured to emit or collect light in a beam (C4) centred about a plane inclined with respect to the optical axis (z) by an angle θ greater than 25°, in particular between 30° and 45°.

7. Interface module according to the preceding claim, **characterized in that** it furthermore comprises:

   • respectively at least two light sources (5) or at least two light detectors (11), arranged on a printed circuit board (7),
   • respectively at least one detector (11) or at least one light source (5), covering the entire detection space (E),
   • a first light guide according to one of Claims 1 to 10, arranged facing at least one of the light sources (5) or one of the light detectors (11) of the printed circuit board (7),
   • a second light guide (9), comprising a body made of transparent or translucent material that guides light through reflection from its side walls, comprising:
   • an internal dioptre ($\delta_{int}$) of the second light guide (9) at one of the ends of the transparent or translucent body, intended to be directed towards a light detector (11) or one or more light sources (5),
   • an external dioptre ($\delta_{ext}$), located at an end opposite the internal dioptre ($\delta_{int}$) of the body made of transparent material,
   • **characterized in that** the external dioptre ($\delta_{ext}$) of the second light guide (9) comprises two distinct transverse surfaces (S1, S2), with normals pointing in different directions so as to combine light between two separate portions (C1, C2) of the detection space (E), on the one hand, and the internal dioptre ($\delta_{int}$) of the second light guide (9), on the other hand.

8. Interface module according to the preceding claim, **characterized in that** the two separate portions (C1, C2) of the detection space (E) are two transversely extending cones located about two planes inclined with respect to a height (z) of the first light guide by angles less than the angle $\theta$.

9. Interface module according to Claim 7 or 8, **characterized in that** the light sources (5) and/or the light detectors (11) associated with the first and with the second light guide (9, 13) are arranged on one and the same printed circuit board (7).

-U-

100

Fig. 1

U

C₁

C₃

C₂

E

100

1

11

5

3

Fig. 2

Fig. 3

Fig. 4

Fig. 5

Fig. 6

Fig. 7

Fig. 8a

Fig. 8b

Fig. 9

Fig. 10a

Fig. 10b

Fig. 11

Fig. 12a

Fig. 12b

Fig. 13

**EP 3 785 061 B1**

## RÉFÉRENCES CITÉES DANS LA DESCRIPTION

**Documents brevets cités dans la description**

- US 9664909 B1

- WO 2013058381 A1